# FASCICULE DE BREVET EUROPEEN

(11) **EP 2 872 801 B1**
(45) Date de publication et mention de la délivrance du brevet: **25.05.2016**
(21) Numéro de dépôt: 13744742.1
(22) Date de dépôt: 15.07.2013
(51) Int. Cl.: F16K 1/226, F02M 26/00, F16K 11/052

(54) **VANNE DE CONTROLE MOTEUR A ETANCHEITE AMELIOREE**
MOTORSTEUERUNGSVENTIL MIT VERBESSERTER ABDICHTUNG
ENGINE CONTROL VALVE HAVING IMPROVED SEALING

(30) Priorité: 16.07.2012 FR 1256856
(43) Date de publication de la demande: 20.05.2015
(73) Titulaire: Valeo Systèmes de Contrôle Moteur, 95800 Cergy (FR)
(72) Inventeur: HODEBOURG, Grégory, F-78500 Sartrouville (FR)
(74) Mandataire: Garcia, Christine
(86) Numéro de dépôt international: PCT/FR2013/051693
(87) Numéro de publication internationale: WO 2014/013177

(56) Documents cités:
- WO-A1-2006/118097
- DE-A1- 19 718 862
- FR-A1- 2 962 184
- US-A- 3 250 510
- US-A- 4 796 857
- US-A- 5 531 205

## Description

L'invention se rapporte à une vanne de contrôle moteur à étanchéité améliorée. Ce type de vanne peut par exemple équiper un circuit d'alimentation en gaz d'un moteur thermique de véhicule, pour réguler le débit des gaz EGR (Exhaust Gas Recirculation) dans une boucle permettant de ponctionner une partie des gaz d'échappement en sortie de moteur, pour les réinjecter en amont dudit moteur. Le principe de fonctionnement de ce type de vanne repose sur la rotation commandée d'un volet, pouvant passer d'une position d'ouverture complète pour laisser passer les gaz, à une position de fermeture pour bloquer ce passage. L'invention a pour objet une vanne de contrôle moteur à étanchéité améliorée.

Une vanne de contrôle moteur possède donc un volet, qui est monté pivotant sur un axe de rotation. Le volet peut comprendre une première partie et une deuxième partie séparées par ledit axe. Lorsque ce volet se retrouve dans une position de fermeture, il vient au contact d'un joint solidaire du corps de la vanne, ledit joint assurant l'étanchéité de la vanne en agissant alors comme une butée de positionnement dudit volet. FR 296 2184 décrit une vanne selon le préambule de la revendication 1 et décrit ainsi un tel joint.

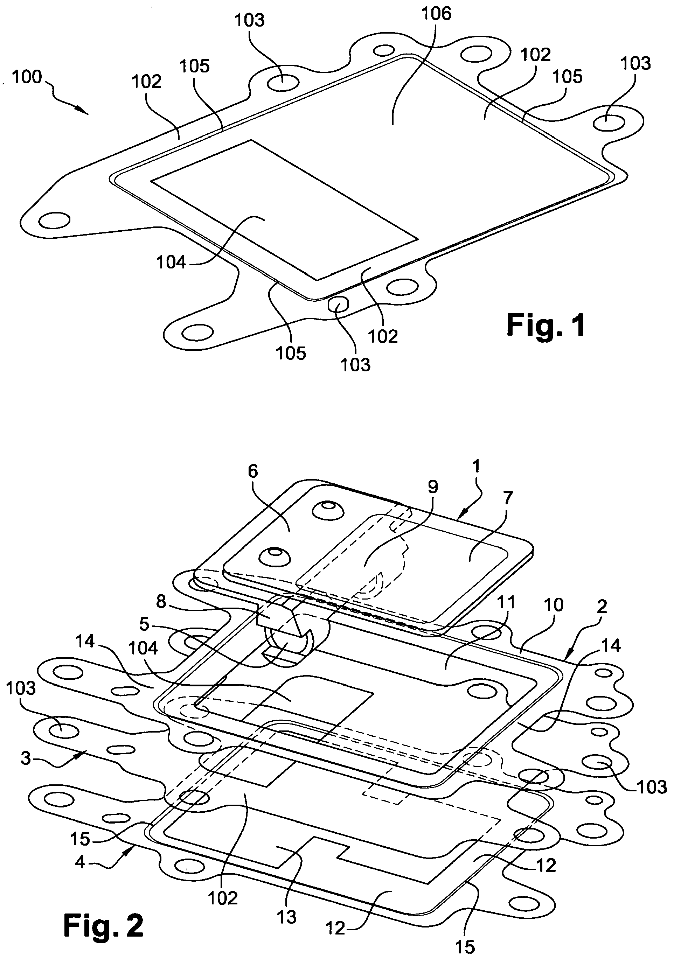

En se référant à la figure 1, un tel joint 100 est globalement plan, et il est fixé dans le corps de la vanne, en étant inséré au niveau d'une zone périphérique 102 entre deux éléments de fonderie dudit corps. Cette zone périphérique 102 possède une pluralité d'orifices 103, destinés chacun à être traversé par une vis pour assurer la fixation dudit joint 100 entre lesdits éléments de fonderie. Ce joint 100 possède une ouverture 104 et une portion pleine 106, et lorsque le volet est en position de fermeture, la première partie du volet vient au contact de l'une des deux faces du joint 100 pour obturer ladite ouverture 104, tandis que la deuxième partie dudit volet vient affleurer l'autre face dudit joint 100 au niveau de la portion pleine 106. Généralement, un tel joint 100 est doté d'une lèvre périphérique 105, apte à se déformer sous l'effet d'un serrage des deux éléments de fonderie l'un contre l'autre, lors de la fixation du joint 100 dans la vanne.

Un inconvénient majeur engendré par le montage d'un tel joint est que la zone centrale dudit joint 100, qui est amenée à interagir avec le volet pour assurer l'étanchéité de la vanne, risque de légèrement bouger sous l'effet de la déformation de la lèvre périphérique provoquée par le serrage entre les deux éléments de fonderie, altérant ainsi la qualité de l'étanchéité de la vanne. Autrement dit, la position définitive du joint une fois qu'il a été fixé entre ces éléments de fonderie est décalée par rapport à son pré positionnement idéal dans la vanne avant montage. Ainsi, pour une bonne étanchéité assurée entre le joint et les éléments de fonderie, on risque d'altérer l'étanchéité entre ledit joint et le volet.

L'invention a pour objet, selon l'un de ses aspects, une vanne de contrôle moteur, comprenant un corps délimitant un conduit interne et un volet mobile en rotation, ledit volet étant apte à pivoter entre une position d'ouverture permettant le passage de gaz dans le conduit et une position de fermeture obturant le conduit,
la vanne comprenant un premier système d'étanchéité du conduit vis-à-vis de l'extérieur du corps et un deuxième système d'étanchéité, distinct du premier, et assurant l'étanchéité du volet lorsqu'il est en position de fermeture.

Selon l'aspect ci-dessus de l'invention, l'étanchéité du conduit vis-à-vis de l'extérieur du corps, encore appelée « étanchéité externe de la vanne» par la suite est découplée de l'étanchéité du volet lorsqu'il est en position de fermeture, encore appelée « étanchéité interne de la vanne » par la suite. L'étanchéité interne et l'étanchéité externe sont ainsi assurées par des moyens différents. Chacun de ces moyens étant dédié à une étanchéité spécifique, il peut être choisi en fonction de cette étanchéité, de sorte que chaque étanchéité peut être assurée de façon optimale, contrairement au cas où un même moyen assure à la fois l'étanchéité externe et l'étanchéité interne de la vanne.

Selon l'invention, le deuxième système d'étanchéité est formé par un joint d'étanchéité solidaire du corps de la vanne, ce joint comportant une ouverture obturée par le volet lorsqu'il est en position de fermeture.

Selon un exemple de mise en oeuvre de l'invention, le corps peut comprendre deux éléments, notamment de fonderie, et le premier système d'étanchéité peut comprendre deux joints de liaison venant respectivement au contact d'un de ces éléments. Le premier système d'étanchéité assure ainsi l'étanchéité vis-à-vis de fluide(s) extérieur(s) susceptible(s) de gagner le conduit depuis l'extérieur du corps en passant entre les éléments de fonderie.

Le joint d'étanchéité peut être inséré entre les deux joints de liaison.

Le joint d'étanchéité peut être rigoureusement plan sur toute sa surface. Le terme « rigoureusement plan » signifie que ce joint est alors dépourvu d'une lèvre périphérique, et présente une planéité parfaite, sans relief apparent. Les trois joints sont préférentiellement réalisés en inox. Les deux joints de liaison peuvent éventuellement être recouverts d'un matériau en caoutchouc. Lorsque le joint d'étanchéité est pris « en sandwich » entre les deux joints de liaison, il n'est donc pas en contact direct avec les éléments de fonderie, et chaque joint de liaison est en contact avec ledit joint d'étanchéité et un élément de fonderie. Les trois joints sont avantageusement idéalement superposés.

La vanne de contrôle moteur selon l'exemple de mise en oeuvre ci-dessus comprend alors un deuxième système d'étanchéité se présentant sous la forme d'un joint configuré de manière à ce que sa fixation entre deux éléments de fonderie soit sans influence sur son interaction avec le volet d'obturation de ladite vanne pour assurer l'étanchéité interne. De cette manière, une fois que le joint est pré positionné dans la vanne dans une position idéale pour assurer une interaction optimisée avec le volet, un serrage entre les deux éléments de fonderie pour fixer définitivement ledit joint dans la vanne, n'aura pas ou que peu d'impact sur le positionnement définitif dudit joint dans la vanne. La vanne peut ainsi présenter une étanchéité interne bien maîtrisée.

Chaque joint de liaison peut posséder une lèvre périphérique. En variante, chaque joint de liaison peut être un joint plan annulaire.

Dans l'exemple de mise en oeuvre ci-dessus, les efforts issus du serrage entre les deux éléments de fonderie pour fixer le joint d'étanchéité vont se porter sur les joints de liaison réalisant l'étanchéité externe, le cas échéant via leurs lèvres périphériques, qui vont réagir en se déformant, préservant ainsi l'intégrité structurelle du joint d'étanchéité inséré entre lesdits joints de liaison. Autrement dit, le joint d'étanchéité, dont le positionnement dans la vanne requiert une grande précision, ne sera que peu, voire pas, déplacé lors de sa fixation dans la vanne, sous l'effet des contraintes engendrées par le serrage des éléments de fonderie. De cette manière, la présence des joints de liaison permet de découpler l'interaction du joint d'étanchéité avec les éléments de fonderie de l'interaction dudit joint d'étanchéité avec le volet.

Les joints de liaison peuvent être arrangés autour du joint d'étanchéité de manière à ce que leur lèvre périphérique les écarte dudit joint d'étanchéité. Pour cette configuration, le joint d'étanchéité est au contact des deux joints de liaison au niveau de leurs zones périphériques insérées entre les deux éléments de fonderie, les deux joints de liaison s'écartant dudit joint d'étanchéité au niveau de leur partie interne.

Avantageusement, le joint d'étanchéité et les deux joints de liaison sont insérés entre les deux éléments de fonderie au niveau d'une zone périphérique desdits joints. Cette zone périphérique peut correspondre pour chaque joint à une zone annulaire la plus éloignée du centre dudit joint. De cette manière, la zone périphérique de chaque joint est dédiée à la fixation desdits joints dans la vanne, tandis que leur partie centrale coopère avec le volet pour assurer une bonne étanchéité de la vanne.

De façon préférentielle, le joint d'étanchéité possède une partie centrale délimitée extérieurement par la zone périphérique, ladite partie centrale comprenant l'ouverture et une portion pleine, ladite partie centrale et ladite zone périphérique étant placées rigoureusement sur le même plan. Un joint strictement plan est rapide et facile à fabriquer, puisqu'il ne nécessite aucune phase d'emboutissage pour créer un relief, comme par exemple une lèvre périphérique.

De façon avantageuse, au moins l'un des deux joints de liaison est de forme annulaire. En effet, les joints de liaison n'ayant de préférence qu'une fonction de reprise d'effort au niveau de leur zone périphérique, on peut éviter que cers derniers s'étendent de façon significative vers l'intérieur de leur zone périphérique.

Avantageusement, la zone périphérique de chaque joint est dotée d'orifices pour permettre leur montage entre les deux éléments de fonderie avec des moyens de fixation indépendants. Lorsque les trois joints sont configurés pour être superposés, les orifices peuvent être situés aux mêmes emplacements sur chaque joint, de manière à ce qu'ils se correspondent idéalement au moment de leur fixation entre les deux éléments de fonderie. Les moyens de fixation indépendants peuvent par exemple être constitués de vis.

Selon l'invention le volet comprend un axe de rotation séparant ledit volet en une première partie, notamment plane, et une deuxième partie, notamment plane, la première partie dudit volet venant obturer l'ouverture du joint d'étanchéité lorsque le volet est dans une position de fermeture. En effet, un montage de trois joints superposés est particulièrement adapté à une vanne fonctionnant avec un volet en deux parties. Les deux parties peuvent être planes, en parfaite continuité l'une de l'autre et être rigidement fixées l'une à l'autre.

Selon l'invention, la deuxième partie du volet vient affleurer une portion pleine du joint d'étanchéité délimitant partiellement l'ouverture, lorsque le volet est dans une position de fermeture.

De façon avantageuse, la première partie du volet vient au contact d'une face du joint d'étanchéité pour obturer l'ouverture, la deuxième partie dudit volet venant affleurer la face opposée dudit joint au niveau de portion pleine, lorsque le volet est dans une position d'ouverture.

Avantageusement, le volet comprend un renflement, placé entre la deuxième partie et l'axe de rotation, ledit renflement étant positionné de manière à demeurer au contact de la portion pleine du joint d'étanchéité, lorsque le volet pivote entre une position d'ouverture et une position de fermeture ou inversement. En effet, puisque le joint d'étanchéité est inséré au niveau de sa zone périphérique entre deux éléments de fonderie du corps de la vanne, sa partie centrale constitue alors une zone de faiblesse structurelle, susceptible de se déformer sous l'effet de la température et de la pression élevées des gaz qui circulent dans ladite vanne, avec pour conséquence la création de passages de fuite pour lesdits gaz et un blocage éventuel en rotation dudit volet. Le renflement sert donc de soutien permanent à la partie centrale du joint, en demeurant au contact de la portion pleine du joint pendant le pivotement complet du volet, pour passer d'une position de fermeture à une position d'ouverture, ou inversement. Ce renflement agit ainsi comme une butée de contact destinée à empêcher, à tout instant de la rotation du volet, une quelconque déformation de la portion pleine du joint. Un tel renflement permet de préserver l'intégrité géométrique du joint, et donc d'assurer un bon fonctionnement de la vanne ainsi qu'une bonne étanchéité de celle-ci.

De façon préférentielle, la section transversale du renflement est délimitée par un segment rectiligne et par un segment incurvé dont les deux extrémités joignent les deux extrémités dudit segment rectiligne. Le segment rectiligne correspond à l'embase du renflement par laquelle ledit renflement est sur le volet, et le segment arrondi correspond à la surface externe du renflement qui saille dudit volet.

Selon un mode de réalisation préféré d'une vanne selon l'invention, le renflement est hémicylindrique. Il s'agit du cas particulier pour lequel le segment incurvé délimite un demi-cercle, c'est-à-dire que le renflement est arrondi.

Les vannes selon l'invention présentent l'avantage d'être performantes en matière de fonctionnement, en empêchant de façon simple et judicieuse la déformation du joint, lors de sa fixation dans le corps. De cette manière, le positionnement dudit joint sera rigoureux et précis, sans fluctuation au moment de son montage dans la vanne. Lesdites vannes ont de plus l'avantage de demeurer d'un encombrement constant par rapport aux vannes déjà existantes, puisque les pièces ajoutées, essentiellement constituées par les deux joints supplémentaires, sont de très faible épaisseur et peu étendues.

On donne ci-après, une description détaillée d'un mode de réalisation préféré d'une vanne selon l'invention, en se référant aux dessins annexés sur lesquels :
- la figure 1 est une vue en perspective d'un joint de l'état de la technique,
- la figure 2 est une vue éclatée d'un ensemble constitué par trois joints superposés et un volet, et mis en oeuvre dans une vanne selon l'invention, et
- la figure 3 est une vue schématique en coupe de l'interaction entre les trois joints d'une vanne selon l'invention.

La figure 1 a déjà été décrite. Les éléments communs entre cette figure et les autres figures conservent les mêmes références.

Une vanne de contrôle moteur selon l'invention peut par exemple être une vanne EGR, régulant le débit des gaz dans une boucle reliant un circuit d'échappement à un circuit d'admission d'air d'un moteur thermique de véhicule.

En se référant à la figure 2, une vanne de contrôle moteur selon l'invention met en oeuvre un volet 1 et trois joints 2, 3, 4 destinés à venir s'insérer entre deux éléments de fonderie du corps de ladite vanne. Le volet 1 comprend un axe de rotation 5 ainsi qu'une première partie 6 et une deuxième partie 7, lesdites parties 6, 7 étant placées de part et d'autre dudit axe 5, en continuité l'une de l'autre. Ces deux parties 6, 7 sont de faible épaisseur et sont fixées rigidement l'une à l'autre. Le contour général du volet 1 délimité par ces deux parties 6, 7 est sensiblement rectangulaire, chacune desdites parties 6, 7 étant également de forme rectangulaire.

L'axe de rotation 5 est décalé par rapport à un plan incluant les deux parties 6, 7, et est situé à l'extrémité d'un bras de levier 8 s'étendant de façon sensiblement perpendiculaire audit plan, ledit bras 8 prenant naissance au niveau du plan d'interface fictif entre lesdites parties 6, 7. Le terme « fictif » signifie qu'aucune marque particulière n'indique précisément l'emplacement du plan d'interface sur le volet 1 entre les deux parties 6, 7. Le volet 1 comprend un renflement arrondi 9, placé sur le bras de levier 8, entre la deuxième partie 7 et l'axe de rotation 5, ledit renflement 9 s'étendant parallèlement audit axe 5. Le renflement 9 saille du bras de levier 9 parallèlement à la deuxième partie 7, et présente une section transversale délimitée par un segment rectiligne et un segment incurvé, dont les deux extrémités joignent les deux extrémités dudit segment rectiligne. Le segment rectiligne correspond à une embase plane du renflement 9 par laquelle il est solidarisé au bras de levier 8, et le segment incurvé correspond à la surface externe arrondie dudit renflement 9.

Une vanne selon l'invention comprend également trois joints 2, 3, 4 dont l'un représente un joint d'étanchéité 3 apte à coopérer avec le volet 1 pour assurer l'étanchéité interne de la vanne lorsque celle-ci se retrouve dans une position de fermeture, les deux autres joints 4,5 constituant des joints de liaison pour la fixation du joint d'étanchéité 3 dans la vanne et assurant l'étanchéité externe de la vanne. Contrairement au joint 100 représenté sur la figure 1, le joint d'étanchéité 3 est parfaitement plan car il ne possède pas de lèvre périphérique. L'un 2 des deux joints de liaison est annulaire, et est constitué essentiellement par une zone périphérique 10 délimitant une ouverture élargie 11 par rapport à celle 104 du joint de liaison 3. Cette zone périphérique 10 est dans cet exemple annulaire et elle est dotée d'une lèvre 14 périphérique.

La zone périphérique 10 de ce joint de liaison 4 a dans l'exemple considéré la même géométrie et les mêmes dimensions que celles de la zone périphérique 102 du joint d'étanchéité 3. L'autre joint 4 de liaison est globalement annulaire, et est constitué par une zone périphérique 12 délimitant une ouverture profilée 13, dont les dimensions sont supérieures à celles de l'ouverture 104 du joint d'étanchéité 3. La zone périphérique 12 de cet autre joint 4 de liaison est dotée d'une lèvre périphérique 15, et a la même géométrie et les mêmes dimensions que celles de la zone périphérique 102 du joint d'étanchéité 3. Les zones périphériques 10, 102, 12 des trois joints 2, 3, 4 sont munis d'orifices 103 placés au même endroit, si bien que, lorsque lesdits trois joints 2, 3, 4 sont idéalement superposés, leurs zones périphériques 10, 102, 12 et donc leurs orifices 103, se correspondent. Ces orifices 103 sont destinés à être traversées par des vis dans l'exemple décrit pour assurer la fixation des trois joints 2, 3, 4 entre les deux éléments de fonderie du corps de la vanne.

Ces trois joints 2, 3, 4 sont placés entre les deux éléments de fonderie au niveau de leur zone périphérique 10, 102, 12, en étant idéalement superposés, le joint d'étanchéité 3 étant placé entre les deux joints 2, 4 de liaison, et chacun desdits joints 2, 4 de liaison étant au contact d'un élément de fonderie différent. Dans cette configuration de superposition, les orifices 103 de fixation des trois joints 2, 3, 4 se correspondent parfaitement.

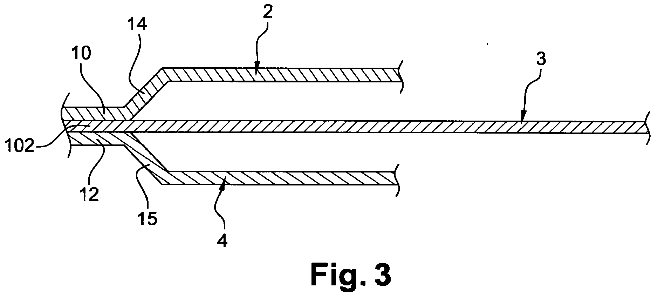

En se référant à la figure 3, la zone périphérique 10, 12 de chaque joint de liaison 2, 4 vient au contact d'une face de la zone périphérique 102 du joint d'étanchéité 3, et les lèvres périphériques 14, 15 de chacun desdits joints de liaison 2, 4 ont tendance à écarter chacun desdits joints de liaison 2, 4 dudit joint d'étanchéité 3 central. Ainsi, lorsque les deux éléments de fonderie vont être serrés, les deux joints de liaisons 2,4 vont encaisser les efforts produits lors de ce serrage, en se déformant au niveau de leur lèvre périphérique 14, 15, préservant ainsi l'intégrité structurelle du joint d'étanchéité 3.

En se référant à la figure 2, le volet 1 qui y est représenté est apte à pivoter entre une position de complète ouverture pour laquelle les gaz peuvent traverser la vanne avec un débit maximal, et une position de fermeture pour laquelle la première portion 6 du volet 1 vient au contact d'une face du joint d'étanchéité 3 pour obturer l'ouverture 104 dudit joint 3, et pour laquelle la deuxième partie 7 du volet 1 vient affleurer la face opposée dudit joint 3 au niveau de la portion pleine 106. Le renflement 9 du volet 1 est au contact de la partie de la portion pleine 106 du joint 3 qui borde partiellement l'ouverture 104, et lorsque le volet 1 pivote dans un sens ou dans l'autre pour s'ouvrir ou se fermer, ledit renflement 9 demeure au contact de ladite portion pleine durant toute la rotation dudit volet 3. De cette manière, le renflement 9 sert de pièce de maintien pour la zone du joint d'étanchéité 3 qui est la plus susceptible de se déformer par dilatation thermique, du fait de la présence de gaz chauds dans la vanne.

La présence des deux joints de liaison 2, 4 préserve l'intégrité du joint d'étanchéité 3, en évitant que la position dudit joint 3 ne fluctue lors de sa fixation entre les deux éléments de fonderie du corps de la vanne.

L'invention n'est pas limitée à l'exemple qui vient d'être décrit. Le découplage entre l'étanchéité interne et l'étanchéité externe de la vanne peut être obtenu autrement que grâce aux joints 2 à 4 qui viennent d'être décrits.

Dans une variante non représentée, le joint d'étanchéité 3 est tel que décrit ci-dessus mais les joints de liaison 2 et 4 sont annulaires et peuvent être dépourvus de lèvre périphérique, étant alors plans.

## Revendications

1. Vanne de contrôle moteur, comprenant un corps délimitant un conduit interne et un volet mobile (1) en rotation, ledit volet (1) étant apte à pivoter entre une position d'ouverture permettant le passage de gaz dans le conduit et une position de fermeture obturant le conduit, la vanne comprenant un système d'étanchéité (2, 3) du conduit vis-à-vis de l'extérieur du corps et assurant l'étanchéité du volet (1) lorsqu'il est en position de fermeture, le système d'étanchéité comprenant un joint (3) d'étanchéité solidaire du corps de la vanne, ce joint (3) comportant une ouverture (104) obturée par le volet (1) lorsqu'il est en position de fermeture,
le volet (1) comprenant un axe de rotation (5) séparant ledit volet (1) en une première partie (6) et une deuxième partie (7), la première partie (6) dudit volet (1) venant obturer l'ouverture (104) du joint d'étanchéité (3) lorsque le volet (1) est dans une position de fermeture,
la deuxième partie (7) du volet (1) venant affleurer une portion pleine (106) du joint d'étanchéité (3) délimitant partiellement l'ouverture (104), lorsque le volet (1) est dans la position de fermeture, **caracterisée en ce que** le systéme d'étanchéité (2, 3, 4) comprend un premier système d'étanchéité (2, 4) du conduit vis-à-vis de l'extérieur du corps et un deuxième système d'étanchéité (3), distinct du premier, assurant l'étanchéité du volet (1) lorsqu'il est en position de fermeture et étant formé par le joint (3).

2. Vanne selon la revendication 1, le corps comprenant deux éléments, le premier système d'étanchéité comprenant deux joints (2,4) de liaison venant respectivement au contact d'un des éléments de fonderie.

3. Vanne selon la revendication 2, le joint (3) d'étanchéité étant inséré entre les deux joints (3,4) de liaison.

4. Vanne selon la revendication 3, le joint (3) d'étanchéité étant rigoureusement plan sur toute sa surface et chaque joint (2,4) de liaison possédant une lèvre périphérique (14,15)

5. Vanne selon la revendication 4, les joints de liaison (2,4) étant arrangés autour du joint d'étanchéité (3) de manière à ce que leur lèvre périphérique (14,15) les écarte dudit joint d'étanchéité (3).

6. Vanne selon l'une quelconque des revendications 2 à 5, le joint d'étanchéité (3) et les deux joints de liaison (2,4) étant insérés entre les deux éléments de fonderie au niveau d'une zone périphérique desdits joints (10, 12, 102).

7. Vanne selon la revendication 6, le joint d'étanchéité (3) possédant une partie centrale délimitée extérieurement par la zone périphérique (102), ladite partie centrale comprenant l'ouverture (104) et une portion pleine (106), ladite partie centrale et ladite zone périphérique (102) étant placées rigoureusement sur le même plan.

8. Vanne selon l'une quelconque des revendications 2 à 7, au moins l'un des deux joints de liaison (2,4) étant de forme annulaire.

9. Vanne selon l'une quelconque des revendications 1 à 8, la première partie du volet (6) venant au contact d'une face du joint d'étanchéité (3) pour obturer l'ouverture (104), la deuxième partie (7) dudit volet (1) venant affleurer la face opposée dudit joint (3) au niveau de portion pleine (106), lorsque le volet (1) est dans une position d'ouverture.

10. Vanne selon l'une quelconque des revendications 1 à 9, le volet (1) comprenant un renflement (9), placé entre la deuxième partie (7) et l'axe de rotation (5), ledit renflement (9) étant positionné de manière à demeurer au contact de la portion pleine (106) du joint d'étanchéité (3) lorsque le volet (1) pivote entre une position d'ouverture et une position de fermeture ou inversement.

11. Vanne selon l'une quelconque des revendications précédentes, la première partie (6) et la deuxième partie (7) du volet (1) étant planes.

## Patentansprüche

1. Motorsteuerventil, umfassend einen Körper, der einen inneren Kanal und eine drehbewegliche Klappe (1) begrenzt, wobei die Klappe (1) geeignet ist, zwischen einer Öffnungsposition, die den Durchgang von Gas im Kanal gestattet, und einer Schließposition, die den Kanal verschließt, zu schwenken,
wobei das Ventil ein System (2, 3, 4) zum Abdichten des Kanals gegenüber dem Äußeren des Körpers, das die Dichtheit der Klappe (1) gewährleistet, wenn sie in der Schließposition ist, umfasst, wobei das Dichtsystem eine Dichtung (3) umfasst, die fest mit dem Körper des Ventils verbunden ist, wobei diese Dichtung (3) eine Öffnung (104) umfasst, die von der Klappe (1) verschlossen wird, wenn sie in der Schließposition ist,
wobei die Klappe (1) eine Rotationsachse (5) umfasst, die die Klappe (1) in einen ersten Teil (6) und einen zweiten Teil (7) unterteilt, wobei der erste Teil (6) der Klappe (1) die Öffnung (104) der Dichtung (3) verschließt, wenn die Klappe (1) in einer Schließposition ist,
wobei der zweite Teil (7) der Klappe (1) einen massiven Abschnitt (106) der Dichtung (3) berührt, der die Öffnung (104) teilweise begrenzt, wenn die Klappe (1) in der Schließposition ist, **dadurch gekennzeichnet, dass** das Dichtsystem (2, 3, 4) ein erstes System (2, 4) zum Abdichten des Kanals gegenüber dem Äußeren des Körpers und ein zweites Dichtsystem (3) umfasst, das vom ersten verschieden ist, die Dichtheit der Klappe (1) gewährleistet, wenn sie in der Schließposition ist, und durch die Dichtung (3) gebildet ist.

2. Ventil nach Anspruch 1, wobei der Körper zwei Elemente umfasst, wobei das erste Dichtsystem zwei Verbindungsfugen (2, 4) umfasst, die jeweils mit einem der Gussteile in Kontakt kommen.

3. Ventil nach Anspruch 2, wobei die Dichtung (3) zwischen den beiden Verbindungsfugen (3, 4) eingesetzt ist.

4. Ventil nach Anspruch 3, wobei die Dichtung (3) auf ihrer ganzen Oberfläche streng eben ist und jede Verbindungsfuge (2, 4) eine Umfangslippe (14, 15) besitzt.

5. Ventil nach Anspruch 4, wobei die Verbindungsfugen (2, 4) um die Dichtung (3) herum angeordnet sind, so dass ihre Umfangslippe (14, 15) sie von der Dichtung (3) beabstandet.

6. Ventil nach einem der Ansprüche 2 bis 5, wobei die Dichtung (3) und die beiden Verbindungsfugen (2, 4) auf der Höhe eines Umfangsbereichs der Dichtungen (10, 12, 102) zwischen den beiden Gussteilen eingesetzt sind.

7. Ventil nach Anspruch 6, wobei die Dichtung (3) einen mittleren Teil besitzt, der außen durch den Umfangsbereich (102) begrenzt ist, wobei der mittlere Teil die Öffnung (104) und einen massiven Abschnitt (106) umfasst, wobei der mittlere Teil und der Umfangsbereich (102) streng auf derselben Ebene platziert sind.

8. Ventil nach einem der Ansprüche 2 bis 7, wobei mindestens eine der beiden Verbindungsfugen (2, 4) ringförmig ist.

9. Ventil nach einem der Ansprüche 1 bis 8, wobei der erste Teil der Klappe (6) mit einer Fläche der Dichtung (3) in Kontakt kommt, um die Öffnung (104) zu verschließen, und der zweite Teil (7) der Klappe (1) die gegenüberliegende Fläche der Dichtung (3) auf der Höhe des massiven Abschnitts (106) berührt, wenn die Klappe (1) in einer Öffnungsposition ist.

10. Ventil nach einem der Ansprüche 1 bis 9, wobei die Klappe (1) eine Verdickung (9) umfasst, die zwischen dem zweiten Teil (7) und der Rotationsachse (5) platziert ist, wobei die Verdickung (9) so positioniert ist, dass sie mit dem massiven Abschnitt (106) der Dichtung (3) in Kontakt bleibt, wenn die Klappe (1) zwischen einer Öffnungsposition und einer Schließposition oder umgekehrt schwenkt.

11. Ventil nach einem der vorhergehenden Ansprüche, wobei der erste Teil (6) und der zweite Teil (7) der Klappe (1) eben sind.

## Claims

1. Engine control valve comprising a body that delimits an internal duct, and a rotationally mobile flap (1), said flap (1) being able to pivot between an open position allowing a gas to pass through the duct and a closed position closing off the duct,
the valve comprising a sealing system (2, 3, 4) for sealing the duct with respect to the outside of the body and for sealing the flap (1) when it is in the closed position, the sealing system comprising a sealing gasket (3) that is secured to the body of the valve, this gasket (3) having an opening (104) that is closed off by the flap (1) when it is in the closed position,
the flap (1) comprising a rotary pin (5) that separates said flap (1) into a first part (6) and a second part (7), the first part (6) of said flap (1) closing off the opening (104) in the sealing gasket (3) when the flap (1) is in a closed position,
the second part (7) of the flap (1) being flush with a solid portion (106) of the sealing gasket (3) that partially delimits the opening (104), when the flap (1) is in the closed position, **characterized in that** the sealing system (2, 3, 4) comprises a first sealing system (2, 4) for sealing the duct with respect to the outside of the body, and a second sealing system (3), separate from the first, for sealing the flap (1) when it is in the closed position, and formed by the gasket (3).

2. Valve according to Claim 1, wherein the body comprises two elements, the first sealing system comprising two connecting gaskets (2, 4) that come into contact respectively with one of the cast elements.

3. Valve according to Claim 2, wherein the sealing gasket (3) is inserted between the two connecting gaskets (3, 4).

4. Valve according to Claim 3, wherein the sealing gasket (3) is strictly flat over its entire surface and each connecting gasket (2, 4) has a peripheral lip (14, 15).

5. Valve according to Claim 4, wherein the connecting gaskets (2, 4) are arranged around the sealing gasket (3) such that their peripheral lip (14, 15) spaces them apart from said sealing gasket (3).

6. Valve according to any one of Claims 2 to 5, wherein the sealing gasket (3) and the two connecting gaskets (2, 4) are inserted between the two cast elements at a peripheral region (10, 12, 102) of said gaskets.

7. Valve according to Claim 6, wherein the sealing gasket (3) has a central part delimited externally by the peripheral region (102), said central part comprising the opening (104) and a solid portion (106), said central part and said peripheral region (102) being placed strictly on the same plane.

8. Valve according to any one of Claims 2 to 7, wherein at least one of the two connecting gaskets (2, 4) has an annular shape.

9. Valve according to any one of Claims 1 to 8, wherein the first part of the flap (6) comes into contact with a face of the sealing gasket (3) in order to close off the opening (104), the second part (7) of said flap (1) being flush with the opposite face of said gasket (3) at the solid portion (106), when the flap (1) is in an open position.

10. Valve according to any one of Claims 1 to 9, wherein the flap (1) comprises a bulge (9) placed between the second part (7) and the rotary pin (5), said bulge (9) being positioned so as to remain in contact with the solid portion (106) of the sealing gasket (3) when the flap (1) pivots between an open position and a closed position or vice versa.

11. Valve according to any one of the preceding claims, wherein the first part (6) and the second part (7) of the flap (1) are flat.
